# EUROPEAN PATENT APPLICATION

(11) **EP 1 358 806 A1**
(43) Date of publication of application: **05.11.2003**
(21) Application number: 03009735.6
(22) Date of filing: 02.05.2003
(51) Int. Cl.: A23L 1/00, A47G 19/03, D21H 19/00, C08L 3/04

(54) **Starch-containing coatings for food service articles**

(30) Priority: 03.05.2002 US 377910 P
(71) Applicant: National Starch and Chemical Investment Holding Corporation, New Castle, Delaware 19720 (US)
(72) Inventor: Han, Inkwan, Green Brook, New Jersey 08812-2217 (US); Billmers, Robert L., Stockton, New Jersey 08559 (US); Mackewicz, Viktor L., Califon, New Jersey 07830 (US)
(74) Representative: Held, Stephan, Dr.rer.nat., Dipl.-Chem.

(57) **Abstract**

Coating type compositions and methods for preparing and using the coating composition, as well as food service articles manufactured with the coating. The coating comprises at least one starch and at least one insolubilizer. The coating provides a water and oil resistant barrier when applied to the food service article, and is biodegradable.

## Description

### BACKGROUND OF THE INVENTION

**Technical Field.** The present invention relates to a method of preparing a coating for food service articles, the coating composition and food service articles prepared thereby. More particularly, the present invention relates to biodegradable starch coating for use on food service articles and that provides a water and oil resistant protective shell or coating.

**Background Information.** Synthetic plastic materials such as polystyrene have served as the materials of choice in the manufacture of disposable food service articles, *e.g.*, bowls, trays and cups. Such plastic-based materials are often not readily biodegradable and, in the case of styrene-based products, generate a toxic gas upon incineration. Accordingly, there is an effort to replace these plastic materials with less environmentally damaging materials such as polysaccharides.

Food service articles composed of polysaccharides typically do not display sufficient levels of moisture and oil-resistance and therefore must be further treated with moisture and oil resistant films such as polylactide and polycaprolactones. Such films are often difficult to work with and frequently must be prepared and applied in an expensive separate "off-line" step to the polysaccharide article,

Starch, including both highly modified starch and fractionated starch such as amylose, has been described as a material for use in coating a number of substrates. However, the starch must be used in undesirably large amounts to provide a suitable degree of moisture and oil resistance when used as a food service article coating.

From the above it is seen that there is a continuing need to provide biodegradable food service articles that are easy to prepare and provide a desirable level of moisture and oil resistance.

### SUMMARY OF THE INVENTION

The present invention addresses the above concerns by providing a method for preparing a biodegradable food service article. The method includes the steps of coating the article with a dispersion of starch, plasticizer, wax and an insolubilizer, and curing the coated article. A dispersion of at least one starch and at least one insolubilizer is prepared, with the pH of the dispersion to between about 5.0 and about 11.0. The dispersion is useful for coating food service articles. The method can include the optional step of adding a wax to the dispersion.

When the starch is a granular starch, the method includes cooking an aqueous media of the granular starch under conditions sufficient to fully disperse the starch. Any plasticizer used in the composition should preferably be added before cooking the starch media. Likewise, any wax used in the composition should preferably be added to the media before cooking the starch. The wax and plasticizer are added in an amount of between about 5% and about 25% based on the percentage weight of starch.

The method can optionally include the addition of a plasticizer to the dispersion. The method can also include the optional addition of a film enhancer to the dispersion.

Once the dispersion is prepared, a food service article can be coating with the starch and plasticizer containing coating. Optionally, the food service article can be separately coated with an aqueous solution of an insolubilizer. Once coated, the coated food service article is cured. Curing occurs at about 110° to about 120°C for about one minute to about twenty-four hours.

The present invention is also directed to the coating composition and the biodegradable food service article prepared thereby. The coating composition includes at least one starch able to be used in food contact applications, and at least one insolubilizer for adding water and oil resistance to the coating composition.

The starch can be a chemically modified starch. Useful chemically modified starches include alkenyl succinate starch derivatives, such as those substituted with octenyl succinic anhydride. The alkenyl succinate starch derivative can also be a blend of high molecular weight starch, selected from starches such as waxy maize, corn, tapioca and high amylose starch (defined as greater that about 40% amylose content), and one or more converted alkenyl-succinate derivatives of waxy corn. Such a blend is preferably prepared in an amount of about 10% to about 50% by weight of the high molecular weight portion based on the total starch solids, when used at a concentration of about 20% total solids content.

The optional plasticizer can include polyvinyl alcohol, glycerol, sorbital and combinations thereof. The insolubilizer can be a derivative of epichlorohydrin such as an epichlorohydrin-modified acrylamide, and/or a glyoxal cyclic amide condensate.

The composition can also include a wax, such as paraffin wax, carnauba wax, candelilla wax, microcrystalline wax, petroleum alicyclic hydrocarbon resins, triglyceride esters, and alkyl or alkenyl esters of fatty acids and alcohols and synthetic waxes.

Food service articles coated with the coating composition have a surface oil resistance of less than about 10.5%. They also can have a water absorption value of less than about 10 mg/cm².

The food service articles of the present invention provide desirable levels of water and oil resistance as well as providing an environmentally sound disposable biodegradable container.

### DETAILED DESCRIPTION OF THE INVENTION

The present invention is directed towards a coating for a disposable food service article. The coating includes a dispersed mixture of one or more starches, plasticizers, waxes and insolubilizers that are applied over the article. Once applied, the coated article is then cured.

Biodegradable food service articles are known in the art. These include, in particular, starch and cellulose-based articles. Methods of preparing these articles can be found in, for example, U.S. Patent Nos. 5,810,961, 5,508,072, 5,506,046, 5,830,548 and 5,843,544, as well as German Patent No. 10012686, the disclosures of which are incorporated herein by reference.

All starches and flours and blends thereof (hereinafter ''starch") can be suitable for use in the coatings of the biodegradable food service articles of the present invention, These starches can be derived from any native source. As used herein, a native starch is one as found in nature. Also suitable are starches derived from a plant obtained by standard breeding techniques, including crossbreeding, translocation, inversion, transformation or any other method of gene or chromosome engineering whereby variations are included. In addition, starches derived from a plant grown from artificial mutations and variations of the above generic composition produced by known standard methods of mutation breeding are also suitable herein.

Typical sources for starches are cereals, tubers, roots, legumes and fruits. Native source can be corn, pea, potato, sweet potato, banana, barley, wheat, rice, sago, amaranth, tapioca, arrowroot, canna, sorghum, and waxy or high amylose varieties thereof. As used herein, the term "waxy" includes those starches containing at least about 95% by weight amylopectin. The term "high amylose" includes those starches containing at least about 40% by weight amylose.

Conversion products derived from any of the above starches can be useful herein. These include fluidity or thin-boiling starches prepared by oxidation, enzyme conversion, acid hydrolysis, and heat and or acid dextrinization, as well as thermal and/or sheared products.

Physically modified starches can also be useful. These include, without limitation, pregelatinized or thermally inhibited starches, in particular, pregelatinized or cold water soluble ("CWS") starches. Exemplary processes for preparing pregelatinized granular starches are disclosed in U.S. Patent Nos. 4,280,851, 4,465,702, 5,037,929 and 5,149,799, the disclosures of which are incorporated by reference. Modification by thermal inhibition is described in the family of patents represented by International Publication No. WO 95/04082, which has matured into U.S. Patent Nos. 5,725,676, 5,932,017, 6221,420 and 6,231,675, the disclosures of which are incorporated herein by reference.

Crosslinking may also provide starch derivatives having properties that are useful. Crosslinking agents suitable for food contact use include phosphorus oxychloride, epichlorohydrin, sodium trimetaphosphate and adipic-acetic mixed acid anhydrides. Procedures for preparing such starch derivatives are well known and described, for example, in the chapter entitled *Starch and Its Modification*, by M.W. Rutenberg, HANDBOOK OF WATER SOLUBLE GUMS AND RESINS, R.L. Davidson, Ed., McGraw Hill, Inc., New York, New York, pp. 22-26 to 22-47 (1980).

Chemically modified starches are also suitable for use in the present invention. These derivatives include quaternary ammonium salts containing about 0.1 to about 0.3% bound nitrogen. Suitable modified starches also include esters such as acetate and half esters such as succinate and alkenyl succinate, which can be prepared by reaction with acetic anhydride, succinic anhydride, and alkenyl succinic anhydride, respectively. Other useful starch derivatives include phosphate derivatives prepared by reaction with sodium or potassium orthophosphate or sodium or potassium tripolyphosphate; and ethers such as hydroyxpropyl ether, which can be prepared by reaction with propylene oxide; or other starch derivatives or combinations thereof approved for food contact use.

Starch alkenyl succinate derivatives are especially effective starches for use in the coatings of the present invention. In particular, these include those substituted by about 1 to about 10% alkenyl (C₈-C₁₈ chain) succinic anhydride. More particularly, these include about 2 to about 4% octenyl succinic anhydride. Starch acetates are also included, particularly those having about 1 to about 5% bound acetate by weight of starch, as well as starch alkylene oxide ethers, particularly about 1 to about 20% bound, more particularly about 2 to about 4% bound by weight of starch.

Especially useful starches of the present invention include high molecular weight starches that are either alone or in combination with converted waxy starch. Particularly useful high molecular weight starch blends include alkenyl-succinate derivatives of waxy maize, corn, tapioca and high amylose starch in combination with alkenyl-succinate derivatives of converted or degraded waxy corn. Such blends are particularly useful in blend amounts of between about 10:90 and about 50:50 weight percent, high molecular weight to converted waxy corn respectively, when used at a total concentration of about 20% solids content.

Any starch having suitable properties for use in food contact applications herein may be purified by any method known in the art to remove starch off flavors and colors that are native to the starch or created during starch modification processes. Suitable purification processes for treating the instant starches are disclosed in the family of patents represented by European Patent No. 554 818 to Kasica *et al.* Alkali washing techniques, for starches intended for use in either granular or pregelatinized form, are also useful and described in the family of patents represented by U.S. Patent Nos. 4,477,480 to Seidel and 5,187,272 to Bertalan *et al.*

Insolubilizers useful in the coating composition of the present invention for building water resistance, as well as limiting the amount of dissolvable material in the coating. Insolubilizing compounds suitable for use in the coatings of the present invention include phosphorus oxychloride, epichlorohydrin, sodium trimetaphosphate, glyoxal, potassium and ammonium salts of zirconium carbonate, and adipic-acetic mixed acid anhydrides and derivatives thereof. Derivatives that are particularly suitable include derivatives of epichlorohydrin such as polymeric materials based on epichlorohydrin-modified acrylamides; derivatives of glyoxal such as a glyoxal cyclic amide condensate, and other reaction polymeric materials.

The coating composition of the present invention can optionally include plasticizers for softening and preventing the films from cracking. Plasticizers suitable for use in the coatings of the present invention include, without limitation, polyvinyl alcohol, glycerol, sugar alcohols such as sorbitol, polycarboxylic acid such as citric acid and esters thereof (*e.g.*, ethyl citrate), and low molecular weight polyol polymers (*e.g.*, polyethylene glycol). Particularly useful plasticizers include polyvinyl alcohol (about 88 to about 99.9% hydrolyzed, and preferably medium to high molecular weight), glycerol, sorbital and combinations thereof.

The coatings composition of the present invention can further optionally include waxes, which can serve as a type of plasticizer, improve surface uniformity and smoothness of the coating, and/or improve water resistance by filling in cracks. Waxes suitable for use in the coatings of the present invention include paraffin wax, carnauba wax, candelilla wax, microcrystalline wax, petroleum alicyclic hydrocarbon resins, triglyceride esters, and alkyl or alkenyl esters of fatty acids and alcohols and synthetic waxes, particularly carnauba wax.

In preparing the coating of the present invention, a dispersion of starch, insolubilizer and, optionally, plasticizer is formed. Wax can also optionally be included in the dispersion. The dispersion can be formed by cooking an aqueous slurry or media of granular starch under conditions sufficient to fully disperse the starch (a "cook-up" starch), or by using a pregelatinized or cold-water soluble ("CWS") starch. When a cook-up starch is used, the wax and plasticizer can be added before cooking the starch slurry in order to provide a uniform distribution. The wax and plasticizer are typically used in amounts of between about 5 to about 25%, more particularly about 10 to about 20%, and most particularly between about 12 to about 18%, with all percentages based on the percentage weight of starch.

The resultant dispersed starch mixture is then cooled as needed and adjusted to a pH of between about 5.0 and about 11.0, particularly between about 6.5 and about 10.0, and more particularly between about 7.5 and about 9.0. One skilled in the art recognizes that the optimal pH depends upon the nature of the insolubilizer used. For example, a pH of from 8,0 to 8.5 is optimal when using an insolubilizer such as an epichlorohydrin-modified polyacrylamide (*e.g.*, Polycup® 1884, available from Hercules, Inc.). Preferably, the insolubilizer is added after cooling and adjusting the pH of the starch dispersion.

Other optional components can be added to the starch coating at any step prior to coating the article. These optional components include water-resistant materials such as latex, alkyl ketene dimers, alkenyl succinic anhydride, and urethanes; colorants; emulsion stabilizers; film enhancers such as styrene maleic anhydride; fillers; and rheology modifiers.

Where a non-modified starch is used, a film enhancer such as styrene maleic anhydride can be used to ensure adequate film integrity of the cured coating. This is optional when a modified starch, including blends thereof, is used. In one method of use (the "internal" method), the film enhancer may be added directly to the starch dispersion.

The dispersed starch coating is applied to the polysaccharide food service article. Application methods are well known in the art and can be accomplished, for example, by brushing, dipping, press molding, electrostatic application, or spraying the starch dispersion onto the article so that at least a partially coated article results. For an application to be useful, it should result in (wet) coating applications of between about 10 and about 40 mg/cm², particularly between about 20 to about 30 mg/cm². Spraying, which is particularly useful, can utilize single or dual fluid nozzles at about 20% starch solids content,

In an alternative embodiment, the insolubilizer can be applied as an aqueous solution in a step separate to coating an article with the starch dispersion. After a short term of drying in an oven, this step can be optionally followed by a separate application of an aqueous solution of a film enhancer such as styrene maleic anhydride (the "overcoat" method). Addition of the film enhancer to the coating enhances the insolubilized film matrix, resulting in a bowl with a firm surface that does not soften. Both separate steps may be conducted according to the same techniques as described previously for applying the starch dispersion to the article.

After application of the coating, whether it is applied in one or more steps, it is cured by heating the coated article at about 100° to about 120°C for about one minute to about twenty-four hours. To certain inherent limits, longer treatment times can result in coated food service articles having greater water and oil resistance.

The food service articles of the present invention unexpectedly provide suitable water and oil resistance without undesirable softening of the surface coating. As defined herein, "suitable water and oil resistance" refers to a coated article having a surface oil resistance of less than 10.5%, and a Cobb value of less than 10 mg/cm² over two minutes as measured by the surface oil resistance and water resistance tests described in the following procedures section.

The following examples further illustrate and explain the present invention and should not be taken as limiting in any regard.

### EXAMPLES

### Procedures

### Water Fluidity ("WF") Measurement

The water fluidity of the starches was measured using a Thomas Rotational Shear-Type Viscometer (manufactured by Arthur H. Thomas Co., Philadelphia, PA). The viscometer was standardized at 30°C with standard oil having a viscosity of 24.73 cps, which requires 23.12 +/-0.05 sec. for 100 revolutions. Accurate and reproducible measurements of WF are obtained by determining the time that elapses for 100 revolutions at different solids levels depending on the starch's degree of conversion (as conversion increases, WF increases and viscosity decreases).

The procedure used involved slurrying a required amount of starch (*e.g.*, 6.16 g, dry basis) in 100 ml of distilled water in a covered copper cup. The slurry was heated in a boiling water bath for 30 minutes with occasional stirring. The starch dispersion was brought to final weight (*e.g.*, 107 g) with distilled water. The time required for 100 revolutions of the resultant dispersion at approximately 81° to 83°C was recorded and converted to a water fluidity number using a conversion table.

| **Time Required for 100 Revolutions (seconds)** | | | | |
|---|---|---|---|---|
| Amount of Starch Used (anhydrous, g) | | | | Water |
| 6.16^{a} | 8.80^{b} | 11.44^{c} | 13.20^{d} | Fluidity |
| 60.0 | | | | 5 |
| 39.6 | | | | 10 |
| 29.3 | | | | 15 |
| 22,6 | | | | 20 |
| 20,2 | | | | 25 |
| | 33.4 | | | 30 |
| | 27.4 | | | 35 |
| | 22.5 | | | 40 |
| | | 32,5 | | 45 |
| | | 26.8 | | 50 |
| | | 22.0 | | 55 |
| | | | 24.2 | 60 |
| | | | 19.2 | 65 |
| | | | 15.9 | 70 |
| | | | 13.5 | 75 |
| | | | 11.5 | 80 |
| | | | 10.0 | 85 |
| | | | 9.0 | 90 |
| For a, b, c, and d, final weights of starch solutions are 107, 110, 113, and 115 g, respectively. | | | | |

### Hot Water Resistance Measurement (Cobb Test)

This test was used to determine the amount of water absorption upon the exposure of the coated article (here, a bowl) to hot water. The weight of the bowl was recorded ("initial weight"). About fifty (50) mls of approximately 55° to 60°C water was added to the bowl and left undisturbed for a period of 2 minutes. After 2 minutes, the water was decanted off. Any excess water on the bowl was absorbed into a soft cloth.

The bowl was weighed again, and the initial weight was subtracted to determine the total hot water absorbed. The surface area (cm²) of the bowl was divided by that total value. A water absorption value of less than 10.5 mg/cm² over two minutes indicates a coated article having suitable hot water resistance.

### Surface Oil Resistance Measurement

Dyed oleic acid was prepared by mixing 100 ml of oleic acid with 1g of oil soluble dye such as Oil Red O® (available from Spectrum Chemical, New Brunswick, NJ). This mixture was then filtered through a filter paper to remove any undissolved dye and stored in an airtight container. Testing was performed by applying a small amount of the dyed oleic acid to an absorbent wipe, such as cotton, applying the oil uniformly to the substrate to be tested (coated article). Immediately after application, a clean absorbent wipe was used to remove as much of the applied oleic acid as possible. Once the excess oleic acid was removed, the surface of the coated article was analyzed for absorbed dye by the following method.

A ScanJet® 4C/T flatbed scanner (available from Hewlett Packard) was used at the following settings to scan the image the bottom of the stained bowl into the computer.
Type: sharp million of colors
Image Size: 3.5" x 3.5"
Brightness: 188
Contrast: 214

The image was analyzed with a SigmaScan® Pro Image (available from SPSS, Inc., Chicago, IL) at the following settings -
Calibrate distance and area
2 point calibration
262 pixels = 3.5"
XY Distance units = inches
Area units = sq. in.
Define (stained area) by color
From Hue = 0
From saturation = 0
To Hue = 10, 15, 20 *
To saturation = 90

* Values are measured at three Hue settings then averaged in order to eliminate differences in color shade variations.

The defined area was measured and the total area for each hue setting was based on a scale of 0% (*i.e.*, no oil pick-up) to 100% (stained area - corresponding to oil saturation). A value of less than 10% indicates a bowl with suitable oil resistance, less than 5% good oil resistance, and less than 2% very good oil resistance.

### Example 1

This example illustrates the preparation of food service articles (here, a "bowl") prepared according to the present invention.

Starch was slurried in water at 20% solids content. The starch used was a blend of 70% amylose by weight cornstarch treated with 3% octenyl succinic anhydride and waxy corn treated with 3% octenyl succinic anhydride and converted to 85 WF in a 50:50 weight ratio ("Blend"). Wax (carnuba, 15% by weight of starch), and plasticizer (a "Mix" of polyvinyl alcohol (1.7% by weight of starch) and glycerol (7% by weight of starch)) were added to the slurry. The slurry mixture was jet-cooked at approximately 149°C, cooled to room temperature, and adjusted to a pH of about 8.0 to about 8.5 with NaOH.

An insolubilizer (*e.g.*, epichlorohydrin modified polyamide, available from Hercules, Inc., Wilmington, DE as Polycup® 1884, 15% by weight starch; also useful is a glyoxal cyclic amide condensate, available as Sunrez® 700C from OMNOVA Solutions, Inc., Fairlawn, OH) and film enhancer (*e.g.*, styrene maleic anhydride, 10% by weight starch) was added to the dispersion (the "Internal" method) with sufficient agitation so as to prepare a homogeneous mixture. Approximately 2.5 to 4.0 g of the dispersed mixture was sprayed onto the bowl (uncoated bowls available from Apack, prepared according to the methods contained and referenced to in German Patent No. 17906642). The dispersion was applied using a single fluid nozzle (series NF type available from BETE® Fog Nozzle, Inc., Greenfield, MA) at a concentration of 20% starch solids and pressure greater than about 200 psi. The coated bowl was then cured in the oven at temperatures between about 110° and about 120°C for about 24 hours.

In an alternative embodiment, the film enhancer was applied in a separate step (the "Overcoat" method). After coating and curing the bowl with a dispersion containing only the starch plasticizer and insolubilizer and prepared according to the method above, the bowl was cooled to room temperature. The bowl was then sprayed with one gram of a 10% aqueous solution of styrene maleic anhydride and cured again in the oven at temperatures between about 110° to about 120°C for about 24 hours.

### Example 2

Coated food service article samples A-Q were prepared according to the methods provided in Example 1, except that for illustration sake, the plasticizer, insolubilizer and wax components were omitted from some coating formulations as noted in the Table below, The designations "Blend", "Mix", "Overcoat" and "Internal" are defined in Example 1 above. The designation "Corn" refers to dent corn.

The tendency of the coating to soften, the surface oil resistance, and water resistance were then measured for each coated bowl according to the methods listed in the preceding procedures section, and are reported in Table 1 below.

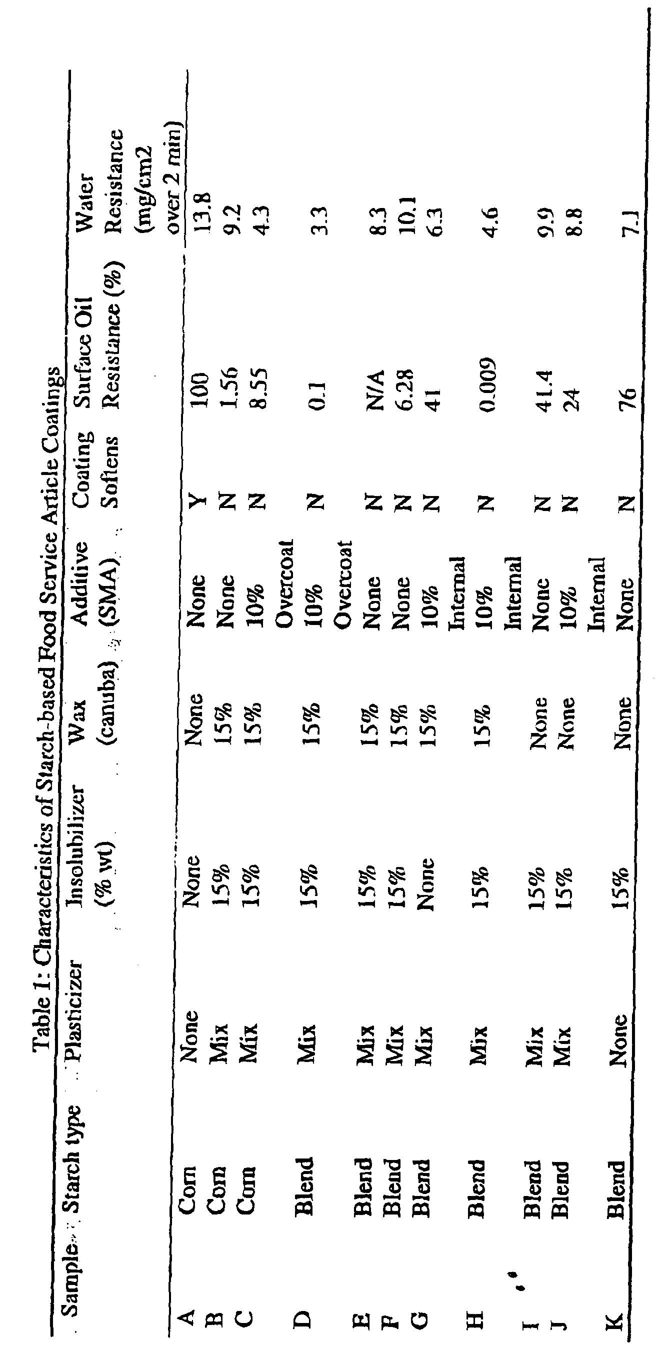

Bowl A illustrates the inferior characteristics of a bowl simply coated with a dispersion of starch, with the plasticizer, insolubilizer or wax omitted from the formulation. The bowl coating cracked and provided little film integrity affording no measurable surface oil resistance (100%) and little water resistance (13.8 mg/cm²). In comparison, the addition of an insolubilizer to the starch dispersion, as illustrated in bowl sample K, dramatically increased water resistance (7.1 mg/cm²), though surface oil resistance (76%) was still unacceptably high.

Sample I, in which a plasticizer ("Mix") was added to the starch dispersion, improved the oil resistance values (41.4%) while retaining acceptable water resistance (9.9 mg/cm²).

When wax is added to the starch dispersion (as illustrated in bowl Sample F), both oil resistance (6.28%) and water resistance values (10.1 mg/cm²) improve into the "suitable bowl" range. As illustrated by the bowls of Sample J having inferior water and oil resistance values, the use of a film enhancer such as styrene maleic anhydride ("SMA") cannot be a substitute for wax in the coatings of the bowls of the present invention.

Further, as bowl Sample H illustrates, the introduction of a film enhancer, (here, SMA), into the coatings of the present invention provides remarkable improvement in both oil (0.009%) and water resistance values (4,9 mg/cm²).

Finally, as a comparison of bowl Samples H and C illustrates, the use of different starches in the coatings of the food service articles of the present invention give food service articles with suitable oil and water resistance.

Although the present invention has been described and illustrated in detail, it is to be clearly understood that the same is by way of illustration and example only, and is not to be taken as a limitation. The spirit and scope of the present invention are to be limited only by the terms of any claims presented hereafter.

## Claims

1. A composition useful in coating food service articles, the coating composition comprising:
at least one starch able to be used in food contact applications; and
at least one insolubilizer for adding water resistance to the coating composition.

2. The composition according to claim 1 wherein the at least one starch is comprised of a chemically modified starch from an alkenyl succinate starch derivative.

3. The composition according to claim 1 further comprising at least one plasticizer selected from the group consisting of polyvinyl alcohol, glycerol, sorbital and combinations thereof.

4. The composition according to claim 3 wherein the at least one plasticizer is a blend of polyvinyl alcohol and glycerol.

5. The composition according to claim 1 wherein the at least one insolubilizer is selected from the group consisting of derivatives of epichlorohydrin, derivatives of glyoxal, ammonium zirconium carbonate, potassium zirconium carbonate and sodium trimetaphosphate.

6. The composition according to claim 1 further comprising a film enhancer for film integrity of the coating composition when cured,

7. The composition according to claim 12 wherein the film enhancer is styrene maleic anhydride.

8. The composition according to claim 1 further comprising a wax selected from the group consisting of paraffin wax, carnauba wax, candelilla wax, microcrystalline wax, petroleum alicyclic hydrocarbon resins, triglyceride esters, and alkyl or alkenyl esters of fatty acids and alcohols and synthetic waxes.

9. Food service articles coated with the coating composition of claim 1 having a surface oil resistance of less than 10.5%.

10. Food service articles coated with the coating composition of claim 1 having a water absorption value of less than 10 mg/cm².

11. A method of preparing a coating for use on food service articles, the method comprising the steps of:
preparing a dispersion of at least one starch and at least one insolubilizer; and
adjusting the pH of the dispersion to between 5,0 and 11.0;
wherein the dispersion is useful for coating food service articles.

12. The method according to claim 11 further comprising the step of adding a wax to the dispersion selected from the group consisting of paraffin wax, carnauba wax, candelilla wax, microcrystalline wax, petroleum alicyclic hydrocarbon resins, triglyceride esters, and alkyl or alkenyl esters of fatty acids and alcohols and synthetic waxes.

13. The method according to claim 11 further comprising the step of adding a plasticizer to the dispersion selected from the group consisting of polyvinyl alcohol, glycerol, sorbital and combinations thereof.

14. The method according to claim 11 further comprising the step of adding a film enhancer to the dispersion.

15. The method according to claim 11 further comprising the step of coating a food service article with the starch and insolubilizer-containing coating.

16. The method according to claim 11 further comprising the step of curing the coated food service article and coating the food service article with an aqueous solution of a film enhancer.
